# EUROPÄISCHE PATENTSCHRIFT

(11) **EP 1 820 111 B1**
(45) Veröffentlichungstag und Bekanntmachung des Hinweises auf die Patenterteilung: **09.06.2010**
(21) Anmeldenummer: 05817026.7
(22) Anmeldetag: 25.11.2005
(51) Int. Cl.: G06F 13/40

(54) **KOMMUNIKATIONSBAUSTEINANORDNUNG MIT EINEM SCHNITTSTELLENMODUL UND SCHNITTSTELLENMODUL**
COMMUNICATIONS MODULE ASSEMBLY COMPRISING AN INTERFACE MODULE AND ASSOCIATED INTERFACE MODULE
ENSEMBLE BLOC DE COMMUNICATION MUNI D'UN MODULE INTERFACE ET MODULE INTERFACE

(30) Priorität: 26.11.2004 DE 102004057410
(43) Veröffentlichungstag der Anmeldung: 22.08.2007
(73) Patentinhaber: ROBERT BOSCH GMBH, 70442 Stuttgart (DE)
(72) Erfinder: HARTWICH, Florian, 72762 Reutlingen (DE); TAUBE, Jan, 72760 Reutlingen (DE)
(86) Internationale Anmeldenummer: PCT/EP2005/056240
(87) Internationale Veröffentlichungsnummer: WO 2006/056605

(56) Entgegenhaltungen:
- EP-A- 1 026 597
- EP-A- 1 189 393
- DE-A1- 10 211 285
- US-A- 5 703 875
- EKIZ ET AL: "Performance Analysis of a CAN/CAN Bridge" 29. Oktober 1996 (1996-10-29), PROCEEDINGS OF THE INTERNATIONAL CONFERENCE ON NETWORK PROTOCOLS, PAGE(S) 181-188 , XP002104040 das ganze Dokument

## Beschreibung

Die Erfindung betrifft eine Anordnung mit einem Schnittstellenmodul gemäß dem Oberbegriff des Anspruch 1.

Die Vernetzung von Steuergeräten, Sensorik und Aktuatorik mithilfe eines Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem oder Bussystem statt, über welches die zu übertragenden Daten in Botschaften übermitteln werden. Dieser Kommunikationsverkehr auf dem Bussystem, Zugriffs- und Empfangsmechanismen sowie Fehlerbehandlung werden über ein entsprechendes Protokoll geregelt.

Als Protokoll beispielsweise im Kfz-Bereich etabliert ist der CAN (Controller Area Network). Dieses ist ein ereignisgesteuertes Protokoll, d.h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den zu übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message Identifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der sogenannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiten einer für das gesamte Bussystem gültigen Zeit ausgelöst. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom sogenannten Bus-Schedule. Ein solches Bussystem ist beispielsweise der TTP/C.

Eine Verbindung der Vorteile beider genannter Busarten erfolgt im Lösungsansatz des zeitgesteuerten CAN, des sogenannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in sogenannten exklusiven Zeitfenstern für periodische Botschaften bestimmter Kommunikationsteilnehmer und in sogenannte arbitrierende Zeitfenster für spontane Botschaften mehrere Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den sogenannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, deterministisches und fehlertolerantes Bussystem insbesondere für den Einsatz in einem Kraftfahrzeug beschrieben wird. Dieses Protokoll arbeitet nach dem Verfahren des Time-Division-Multiple-Access (TDMA), wobei den Teilnehmern bzw. den zu übertragenden Botschaften feste Zeitschlitze zugewiesen werden, in denen sie einen exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird exakt vorausgesagt werden kann und der Buszugriff deterministisch erfolgt. Um die Bandbreite für die Botschaftsübertragung auf dem Bussystem optimal zu nutzen wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit, sogenannte Minislots, ermöglicht.

Wie soeben dargestellt gibt es eine Vielzahl unterschiedlicher Übertragungstechnologien und damit Arten von Bussystemen. Häufig ist es so, dass mehrere Bussysteme gleicher oder unterschiedlicher Art miteinander verbunden werden müssen. Dazu dient eine Busschnittstelleneinheit, ein sogenanntes Gateway. Ein Gateway ist somit eine Schnittstelle zwischen verschiedenen Bussen, die von gleicher oder unterschiedlicher Art sein können, wobei das Gateway Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt. Dabei wird dieses CPU-Interface durch diesen Datenaustausch zusätzlich zu den zum Teilnehmer selbst zu übertragenden Botschaften stark belastet wodurch sich zusammen mit der sich daraus ergebenden Übertragungsstruktur eine relativ niedrige Datenübertragungsgeschwindigkeit ergibt. So zeigt die EP 1 189 393 A2 eine Anordnung mit Gateway, in der der Datenstrom direkt von der CPU zusammengestellt wird, welche dazu Daten vom Empfänger entgegen nimmt. Aus Gründen der Nutzlastoptimierung werden DR data und/oder Antwort-Nachrichten zu einem TCP Infostrom verkettet, um maximalen Durchsatz zu erzielen.

Weiterhin gibt es integrierte Kommunikationscontroller oder Kommunikationsbausteine, die sich einen gemeinsamen Botschaftsspeicher, das sogenannte Message-Memory, teilen und damit die Struktumachteile zu kompensieren. Allerdings sind solche integrierten Kommunikationsbausteine dadurch bezüglich der Datenübertragung sehr unflexibel und insbesondere auf eine bestimmte Anzahl von Busanschlüssen festgelegt. Hierzu zeigt die US 703 875 A einen Switch, bei dem längere Datennachrichten durch eine oder mehrere kurze Kontrollnachrichten unterbrochen oder im zeitlichen Verlauf verzögert werden können. Es findet damit eine vollständige Weiterleitung der Daten (Kontrolldaten und Messagedaten) statt.

So zeigt sich, dass der Stand der Technik nicht in jeder Hinsicht optimale Ergebnisse zu liefern vermag.

Es ist daher die Aufgabe der Erfindung, eine Kommunikationsbausteinanordnung darzustellen, mit welchem der Austausch von Daten und/oder Botschaften, insbesondere die Erstellung neuer Daten und/oder Botschaften, verbessert werden kann.

### Vorteile der Erfindung

Dabei soll insbesondere der Austausch von Daten und/oder Botschaften zwischen mehreren Kommunikationsbausteinen ermöglich werden ohne das CPU-Interface stark zu belasten und ohne mehrere Botschaftsspeicher voneinander abhängig zu machen. Gleichzeitig soll insbesondere die Übertragungsgeschwindigkeit erhöht und die Übertragung flexibel ermöglicht werden.

Die genannte Aufgabe wird insbesondere durch die Merkmale des Anspruchs 1 gelöst. Ein Kommunikationsschnittstellenelement als spezielles Gateway-Interface, welches zwischen den Botschaftsspeichern, also in den entsprechenden Datenpfaden zwischengeschaltet wird, ermöglicht so einen neuen, zusätzlichen Datenpfad.

An den Bus der die verschiedenen Kommunikationsbausteine miteinander verbindet, wird eine Datenintegrationseinheit (DIU) als Schnittstellenmodul angeschlossen, die es ermöglicht ,insbesondere über das Gateway empfangene Daten und/oder Botschaften neu zusammenzustellen bzw. zusammenzufassen bevor diese auf einem oder mehreren Bussen weitergesendet werden. Dabei können mehr als ein solches Schnittstellenmodul als Datenintegrationseinheit angeschlossen werden. So können z.B. je nach Einsatzgebiet auch DIUs mit unterschiedlichen Funktionen eingesetzt werden.

Ein Schnittstellenmodul zur Verschaltung mit wenigstens einem Kommunikationsbaustein ist vorgesehen, wobei das Schnittstellenmodul einen Eingang enthält, über den es erste Daten und/oder Botschaften erhält wobei vorteilhafter Weise in dem Schnittstellenmodul ein erster Übertragungspfad und ein zweiter Übertragungspfad vorgesehen sind, wobei in dem zweiten Übertragungspfad ein Koppelelement vorgesehen ist, welches derart ausgestaltet ist, dass die ersten Daten und/oder Botschaften wenigstens teilweise zu zweiten Daten und/oder Botschaften kombiniert werden.

Dabei weist das Schnittstellenmodul zweckmäßigerweise einen Ausgang auf, wobei ein Schaltmittel vorhanden ist, das derart ausgestaltet sind, dass der erste Übertragungspfad und der zweite Übertragungspfad des Schnittstellenmoduls auf den Ausgang verschaltet werden. Dieses Schaltmittel ist vorteilhaft als Multiplexbaustein ausgebildet.

Das Koppelelement ist zweckmäßigerweise als Koppelfeld ausgebildet, so dass damit aus Bits, Bytes und/oder vorgebbaren Datenblöcken und/oder Teilbotschaften und/oder Botschaften neue zweite Daten und/oder Botschaften erstellt bzw. kombiniert und auf den Ausgang geschaltet werden. Dazu kann vorteilhafter Weise im zweiten Übertragungspfad des Schnittstellenmoduls ein Speicherelement enthalten sein, in welchem die zweiten Daten und/oder Botschaften bis zur fertigen Zusammenstellung gespeichert werden um diese dann vollständig über den Ausgang weiterzuleiten, wobei das Speicherelement insbesondere als Registerbaustein ausgebildet ist.

Vorteilhafter Weise ist dem Schnittstellenmodul ein Modulsteuerwerk zugeordnet, insbesondere enthalten, welches das Koppelelement und/oder das Schaltmittel steuert.

Damit können nun Nachrichten bzw. Daten und/oder Botschaften zusammengefasst bzw. neu kombiniert werden, bevor insbesondere das Gateway die Nachrichten weiterleitet. Gelichzeitig wird durch die Erfindung der Host-Controller, also die Teilnehmer CPU maßgeblich entlastet.

Dabei ist eine höhere Geschwindigkeit bezüglich der Datenintegration bzw. Datenkombination erzielbar durch die Verwendung des wenigstens einen erfindungsgemäßen Schnittstellenmoduls z.B. verglichen mit einem Gateway, das aus unabhängigen Kommunikationscontrollern bzw. Kommunikationsbausteinen zusammengesetzt ist und bei dem eine Datenintegration nur über das CPU Interface erfolgen kann.

Gleichzeitig erhält man den Vorteil hoher Flexibilität und Freiheit bezüglich der Konfigurierbarkeit der Funktion des Schnittstellenmoduls als Datenintegrationseinheit und bezüglich der Anzahl an Busanschlüssen, insbesondere gegenüber einem integrierten und somit stark konfigurationsabhängigen Gateway.

Es ergibt sich somit außerdem eine Anordnung zur Kommunikation mit einem Kommunikationsbaustein mit einem Schnittstellenmodul und einem Kommunikationsschnittstellenelement; wobei das Schnittstellenmodul einen Eingang und einen Ausgang aufweist und mit dem Kommunikationsschnittstellenelement verbunden ist und dem Kommunikationsschnittstellenelement ein Botschaftsspeicher bzw. Message Memory des Kommunikationsbausteins bzw. Kommunikationscontroller zugeordnet ist, wobei ein erster Datenpfad zu und von dem Botschaftsspeicher vorgesehen ist, über welchen erste Daten und/oder Botschaften zu dem und von dem Botschaftsspeicher geleitet werden, dadurch gekennzeichnet, dass das Kommunikationsschnittstellenelement einen zusätzlichen zweiten Datenpfad insbesondere zwischen mehreren Kommunikationsbausteinen bereitstellt, der derart ausgebildet ist, dass die ersten Daten und/oder Botschaften des ersten Datenpfades wenigstens teilweise über den zusätzlichen zweiten Datenpfad geleitet werden und das Schnittstellenmodul über den Eingang und den Ausgang in diesen zweiten Datenpfad geschaltet ist und darüber die ersten Daten und/oder Botschaften wenigstens teilweise empfängt und in dem Schnittstellenelement ein Koppelelement vorgesehen ist, welches derart ausgestaltet ist, dass die empfangenen ersten Daten und/oder Botschaften wenigstens teilweise zu zweiten Daten und/oder Botschaften kombiniert und über den zweiten Datenpfad übertragen werden. Das Schnittsellenmodul entspricht dabei zweckmäßiger Weise dem eingangs der Vorteile beschriebenen Schnittstellenmodul als Datenintegrationseinheit.

Aus dieser Anordnung ergibt sich somit außerdem zweckmäßig eine Kommunikationsbausteinanordnung mit wenigstens einem Kommunikationsbaustein in dem ein Kommunikationsschnittstellenelement enthalten ist und dem ein erfindungsgemäßes Schnittstellenmodul zugeordnet ist, welches mit dem Kommunikationsbaustein verbunden ist, wobei weiterhin ein Botschaftsspeicher enthalten ist und besagter erster Datenpfad über welchen erste Daten und/oder Botschaften geleitet werden, wobei das Kommunikationsschnittstellenelement auch hier den zusätzlichen zweiten Datenpfad bereitstellt, der derart ausgebildet ist, dass die ersten Daten und/oder Botschaften wenigstens teilweise über den zusätzlichen zweiten Datenpfad geleitet werden und das Schnittstellenmodul in diesen zweiten Datenpfad geschaltet ist und darüber die ersten Daten und/oder Botschaften wenigstens teilweise empfängt und in dem Schnittstellenelement das Koppelelement vorgesehen ist, welches derart ausgestaltet ist, dass die empfangenen ersten Daten und/oder Botschaften wenigstens teilweise zu zweiten Daten und/oder Botschaften kombiniert und über den zweiten Datenpfad übertragen werden. Sind wenigstens zwei Kommunikationsbausteine vorhanden, die jeweils ein Kommunikationsschnittstellenelement enthalten, so werden die Kommunikationsbausteine über die zusätzlichen zweiten Datenpfade insbesondere ringförmig verbunden und das in den Ring geschaltete wenigstens eine erfindungsgemäße Schnittstellenmodul überträgt die neuen zweiten Daten und/oder Botschaften über diesen Ring, eben den zweiten Datenpfad zwischen den Kommunikationsbausteinen.

Von besonderem Vorteil ist dabei, dass solche Kommunikationsbausteine sowie entsprechende Kommunikationsschnittstellenelemente es ermöglichen eine solche Anordnungung mit wenigstens zweier solcher Kommunikationsbausteine als Gateway zu realisieren und die Kommunikationsbausteine über die zusätzlichen zweiten Datenpfade zu verbinden, diese insbesondere ringförmig aneinander zu binden und so eine schnelle und flexible Übertragung zu ermöglichen.

Zweckmäßigerweise enthält dabei das Kommunikationsschnittstellenelement ein erstes Schaltmittel und ein zweites Schaltmittel, insbesondere als Multiplexbausteine, wodurch die Einleitung und/oder Ausleitung von vorgebbaren Daten und/oder Botschaften in oder aus dem ersten Datenpfad und/oder in oder aus dem zweiten Datenpfad ermöglicht wird.

Vorteilhafterweise ist dem Kommunikationsschnittstellenelement ebenfalls ein Steuerwerk zugeordnet, durch welches insbesondere das oder die Schaltmittel des Kommunikationsschnittstellenelements gesteuert werden. Dabei ist dieses Steuerwerk gemäß einer ersten Ausführungsform insbesondere im Kommunikationsschnittstellenelement selbst enthalten. Gemäß einer zweiten Ausführungsform kann das Steuerwerk aber auch zweckmäßigerweise im Kommunikationsbaustein oder auch gemäß einer dritten Ausführungsform in dem, dem Kommunikationsbaustein zugeordneten Teilnehmer untergebracht sein. Dabei steuert das Steuerwerk die Übertragung bzw. Leitung der Daten und/oder Botschaften über den zweiten zusätzlichen Datenpfad bzw. gibt insbesondere vor, welche Daten und/oder Botschaften auf den zweiten Datenpfad geleitet werden und/oder vom zweiten Datenpfad in den entsprechenden Botschaftsspeicher, also auf den ersten Datenpfad übergeben werden. Dabei kann das genannte Steuerwerk entsprechend aller drei Ausführungsformen gleichermaßen in Software oder in Hardware realisiert sein.

Es ermöglicht die Erstellung von Daten und/oder Botschaften wobei erste Daten und/oder Botschaften eines ersten Datenpfades von und zu einem Botschaftsspeicher, einem Schnittstellenmodul zugeleitet werden, dadurch gekennzeichnet, dass ein zusätzlicher zweiter Datenpfad vorgesehen ist über welchen die ersten Daten und/oder Botschaften wenigstens teilweise zu dem Schnittsellenmodul geleitet werden, und in dem Schnittstellenmodul, welches in den zweiten Datenpfad geschaltet ist die ersten Daten und/oder Botschaften über einen ersten Übertragungspfad und einen zweiten Übertragungspfad so geleitet werden das die ersten Daten und/oder Botschaften wenigstens teilweise zu zweiten Daten und/oder Botschaften kombiniert und erneut auf den zweiten Datenpfad übertragen werden.

Durch die Erfindung ergeben sich somit die angestrebten Vorteile: Zum einen eine höhere Geschwindigkeit bei der Übertragung von Daten und/oder Botschaften verglichen mit dem CPU-Interface sowie als weiteres eine sehr flexible und freie Konfigurierbarkeit der Übertragung; dies insbesondere auch durch eine sehr flexible und freie Vorgabe der Anzahl der Busanschlüsse verglichen mit einem integrierten Kommunikationsbaustein bzw. einem integrierten Gateway.

Je nach Anwendung kann vorteilhaft eine beliebige Anzahl von Kommunikationsbausteinen bzw. Kommunikationscontrollern mit einer beliebigen Anzahl von Schnittstellenmodulen zur Datenintegration mit beliebiger Funktion zusammengeschaltet werden, ohne dass die einzelnen Kommunikationsbausteine oder auch die Schnittstellenmodule selbst verändert werden müssen. In einem üblichen integrierten Gateway wie im Stand der Technik beschrieben erfordern die Änderung der Funktionalität z.B. der Datenintegrationsfunktion oder die Änderung der Busanschlüsse oder der Zahl der Busanschlüsse stets eine weitgehende Neuentwicklung, die somit erfindungsgemäß vermieden werden kann.

Weitere Vorteile und vorteilhafte Ausgestaltungen ergeben sich aus der Beschreibung sowie den Merkmalen der Ansprüche.

### Zeichnung

Die Erfindung wird im weiteren anhand der in der Zeichnung dargestellten Figur näher erläutert.

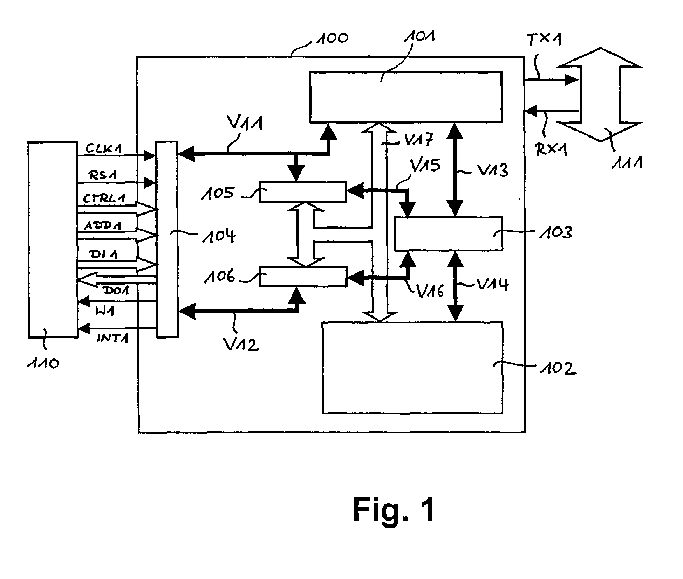

Dabei zeigt Figur 1 einen Kommunikationsbaustein eines Bussystems, insbesondere eines CAN-Bussystems.

Figur 2 zeigt einen erfindungsgemäßen Kommunikationsbaustein mit einem Kommunikationsschnittstellenelement.

Figur 3 zeigt eine Anordnung mit mehreren miteinander verschalteten Kommunikationsbausteinen, insbesondere als Gateway-Anwendung.

Figur 4 zeigt die Anordnung aus Figur 3 wobei zusätzlich ein Schnittstellenmodul in den Kaskadenring eingekoppelt ist.

Figur 5 schließlich zeigt ein erfindungsgemäßes Schnittstellenmodul.

Die Erfindung wird im weiteren anhand der Ausführungsbeispiele näher erläutert.

### Ausführungsbeispiele

Figur 1 zeigt schematisch einen Kommunikationsbaustein 100 zur Anbindung eines Teilnehmers oder Hosts 110 bzw. dessen Ausführungseinheit der CPU an eine Kommunikationsverbindung bzw. einen Bus 111. Dazu ist der Kommunikationsbaustein 100 über einen Schnittstellenbaustein 104 mit dem Teilnehmer 110 respektive als Teil des CPU-Interfaces mit der CPU des Teilnehmers 110 verbunden. Damit ist mit CLK1 ein Takteingang (Clock) bezeichnet, mit RS1 ein Reseteingang, mit CTRL1 ein Controll- oder Steuereingang, mit ADD1 ein Adresseingang, mit DI1 ein Dateneingang und mit DO1 ein Datenausgang sowie mit W1 ein Ausgang der ein Wartesignal (Wait) bereitstellt und einem Ausgang INT1 mit Unterbrechungssignalen (Interrupt).

Im Weiteren wird nun der Inhalt dieses Kommunikationsbausteins 100 beschrieben, wobei die Funktionalität entsprechend des jeweiligen Bussystems respektive der Kommunikationsbaustein hier beispielhaft gewählt ist, eben z.B. als CAN-Kommunikationsbaustein. Die Erfindung kann aber auch auf beliebige andere Kommunikationsbausteine bzw. Kommunikationscontroller sowie andere Bussysteme und Busprotokolle angewendet werden, sodass die gewählte Darstellung in den nachfolgenden Figuren und Ausführungsbeispielen diesbezüglich nicht als einschränkend zu betrachten ist. Insbesondere könnte diese auch zweikanalig, beispielsweise für ein FlexRay-Protokoll, ausgeführt sein. Allerdings ist die CAN oder TTCAN Anwendung eine vorteilhafte und bevorzugte Ausführungsform.

Der Kommunikationsbaustein 100 enthält dazu eine Steuereinheit 101, hier insbesondere eine CAN-Steuereinheit oder einen CAN-Core. Daneben ist ein Botschaftsspeicher insbesondere als Messsage-RAM z.B. als single ported RAM mit 102 dargestellt. Ein Dual ported RAM kann z.B. im Rahmen einer zweikanaligen Anwendung z.B. bei FlexRay-Verwendung finden. Mit 105 und 106 sind zwei Zwischen- oder Pufferspeicher insbesondere Registerbausteine dargestellt, die zum einen zur Pufferung bezüglich des Daten- bzw. Botschaflstransfers dienen, zum anderen die entsprechende Zuordnung bezüglich des entsprechenden Speicherplatzes im Botschaftsspeicher enthalten können. In dieser Ausführungsform sind zwei Register 105 und 106 dargestellt, wobei dies nur beispielhaft ist und auch nur ein einzelnes Register oder auch ein Register, das entsprechend in zwei Speicherbereiche aufgeteilt ist, Einsatz finden kann. Der Daten- bzw. Botschaftstransfer wird über einen Botschaftsverwalter, den sogenannten Message-Handler 103 gesteuert. Dabei ist das erste Register 105 (z.B. als CPU IFC Register) mit dem Schnittstellenbaustein 104 sowie der Steuereinheit 101 über Verbindung V 11 verbunden. Daneben ist das zweite Register 106 mit dem Schnittstellenbaustein 104 verbunden. Beide Register sind jeweils über Verbindungen V 15 und V 16 mit dem Message-Handler oder Botschaftsverwalter 103 verbunden. Der Botschaftsverwalter selbst ist über Verbindung V13 mit der Steuereinheit 101 und über V 14 mit dem Botschaftsspeicher 102 verbunden. Der eigentliche Botschaftsaustausch bzw. die Botschaftsleitung erfolgt über Verbindung V 17, die quasi den ersten Datenpfad (bzw. einen entscheidenden Teil davon) darstellt und die eine Verbindung zwischen Steuereinheit 101, Botschaftsspeicher 102 und den Registern 105 und 106 herstellt.

Wird nun aus den in Figur 1 gezeigten Kommunikationsbausteinen ein Gateway, insbesondere ein CAN-Gateway aufgebaut, so erfordert der Datentransfer, also die Übertragung von Daten und/oder Botschaften zwischen den Kommunikationsbausteinen eine Vielzahl von Lese- und Schreiboperationen, die so wie der Datentransfer über den CPU-Bus (CPU-Interface) abgewickelt werden müssen und somit die Host-CPU, also den Teilnehmer 110 stark belasten und damit die Übertragung verlangsamen.

Mit TX und RX sind die Busanschlüsse, also hier TX1 auf der Sendeseite (transmit) bzw. RX1 empfängerseitig (receive) als Verbindung zu dem Bus 111 dargestellt. Bei einem integrierten Gateway sind diese allerdings dann fest und unflexibel vorgegeben.

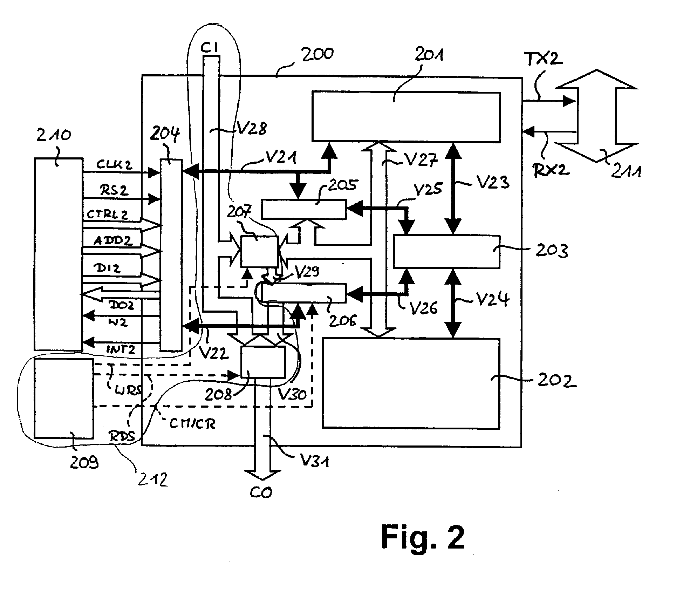

Zur Lösung dieser Problematik ist nun entsprechend Figur 2 ein Kommunikationsschnittstellenelement 212 vorgeschlagen, welches in Verbindung mit dem Kommunikationsbaustein 200 nachfolgend näher erläutert wird. Die bereits zu Figur 1 bei den entsprechenden Teilen 100-111 und V11-V17 gemachten Ausführungen gelten natürlich auch für die diesen entsprechenden Teilen 200-211 (ohne 207-209 und 212) und V21-V27 entsprechend in Figur 2. So stellt Figur 2 im wesentlichen den Kommunikationsbaustein aus Figur 1 mit der entsprechenden erfindungsgemäßen Erweiterung (207-209 und 212 sowie V28-V31) dar, sodass die Ausführungen zu den Figuren 1 und 2 zusammen gesehen werden können.

Der Kommunikationsbaustein 200 verbindet einen Teilnehmer 210 bzw. Host respective eine Host-CPU mit einem Bus 211, wobei die Busanschlüsse mit TX2 und RX2 entsprechend des Sendeausgangs (TX2, transmit) und dem Empfangseingang (RX2, receive) dargestellt sind. Auch dieser Kommunikationsbaustein 200 enthält eine Steuereinheit 201, insbesondere als CAN-Core, einen Botschaftsspeicher 202 insbesondere als Message-RAM, einen Botschaftsverwalter oder Message-Handler 203, die beiden beispielhaften Register, hier mit 205 und 206 bezeichnet (Die Überlegungen zu den Registern 105 und 106 gelten wie oben ausgeführt entsprechend), sowie den Schnittstellenbaustein zum Host 210, hier mit 204 bezeichnet. Der Schnittstellenbaustein erhält Eingänge für den Takt CLK2 (clock), den Reset RS2, einen Steuereingang CTRL2 (control), einen Adresseingang ADD2 und einen Dateneingang DI2. Des weiteren sind Ausgänge DO2 als Datenausgang, ein Wait-Signal W2 und ein Interrupt- oder Unterbrechungsausgang INT2 vorgesehen. Auch in diesem Beispiel ist Register 205 mit der Steuereinheit 201und dem Schnittstellenbaustein 204 hier über die Verbindung V21 gekoppelt. Auch Register 206 ist hier über die Verbindung V22 mit dem Schnittstellenbaustein 204 gekoppelt. Gleichermaßen sind auch hier die beiden beispielhaften Register 205 und 206 über die Verbindungen V25 und V26 mit dem Botschaftsverwalter 203 verbunden. Die Steuereinheit 201 ist über die Verbindung V23 mit dem Botschaftsverwalter 203 und dieser über die Verbindung V24 mit dem Botschaftsspeicher 202 verbunden. Auch hier steuert der Botschaftsverwalter die eigentliche Daten- und/oder Botschaftsübertragung zwischen Bus 211 und Host 210.

Der erste Datenpfad entsprechend Figur 1 V17 ist nun hier mit V27 bezeichnet und enthält insofern eine Besonderheit, als er mit dem Kommunikationsschnittstellenelement 212 also dem Gateway-Interface anstatt mit dem zweiten Register 206 verbunden ist. D.h. das Gateway-Interface ist in den ersten Datenpfad, hier V27, zwischengeschaltet bzw. mit diesem ersten Datenpfad V27 verbunden. Das Kommunikationsschnittstellenelement 212 (Gateway-Interface) greift in den ersten Datenpfad V27 zu dem und von dem Botschaftsspeicher 202 (Message-Memory) ein und hat vorteilhafter Weise die gleiche Wortbreite bezüglich der Übertragung wie der Botschaftsspeicher 202 selbst. Aber auch ein ganzzahliger Teil, insbesondere ein ganzzahliges Vielfaches bezüglich der Wortbreite wäre denkbar. Dabei ist die Daten- und/oder Botschaftsübertragung entsprechend dem jeweiligen Busprotokoll angepasst, z.B. beim CAN eine CAN-Botschaft mit den Steuer- (Control) und Status-Bits. Dies ist entsprechend des jeweiligen Bussystems gestaltbar.

Über die Verbindungen V28, V29, V30, V31 sowie Schaltmittel 207 und 208 wird somit im Kommunikationsbaustein 200 ein zusätzlicher zweiter Datenpfad mit einem Eingang CI (Cascade-Input) und einem Ausgang CO (Cascade-Output) realisiert. Dabei sind die in diesem Beispiel dargestellten zwei Schaltmittel 207 und 208 insbesondere als Multiplexer oder Multiplexbausteine ausgebildet. In der hier dargestellten bevorzugten Ausführungsform werden somit zwei Schaltmittel 207 und 208 verwendet, ebenso ist es aber denkbar nur ein Schaltmittel einzusetzen.

Damit können nun vorgebbare Daten und/oder Botschaften des ersten Datenpfades direkt über den zusätzlichen zweiten Datenpfad geleitet werden, ohne die Host-CPU 210 entsprechend dem normalen Datenweg zu belasten.

Die Steuerung dieses zweiten Datenpfades, also zum einen das Übertragen bzw. Leiten der Daten und/oder Botschaften über den zweiten Datenpfad sowie insbesondere die Auswahl oder Vorgabe der vorgebbaren Daten und/oder Botschaften erfolgt über ein Steuerwerk 209, welches insbesondere als Finite-State-Machine, also eine Zustandsmaschine oder einen Zustandsautomaten (endlicher Automat, Finite-State-Machine FSM) ausgebildet ist. Dieses Steuerwerk 209 insbesondere als Zustandsmaschine oder Zustandsautomat kann zum einen im Kommunikationsbaustein 200 selbst untergebracht sein oder kann diesem zugeordnet sein und außerhalb lokalisiert werden. Insbesondere kann sie in einer Ausführungsform im Teilnehmer 210, dem Host, enthalten sein. In einer Ausführungsform ist sie direkt im Gateway-Interface 212 also dem Kommunikationsschnittstellenelement enthalten. Über einen Schreib-Auswahlausgang WRS (Write Select) ist das erste Schaltmittel, der Multiplexbaustein 207, ansteuerbar. Über einen zweiten Ausgang, einen Lese-Steuerungsausgang RDS (Read Select) ist das zweite Schaltmittel, der Multiplexbaustein 208, ansteuerbar. Durch diese Ansteuerung der beiden Multiplexer 207 und 208 in dem zweiten zusätzlichen Datenpfad des Gateway-Interfaces, also des Kommunikationsschnittstellenelements, ist es möglich, den Datentransfer, also die Übertragung der Daten und/oder Botschaften zu steuern, insbesondere die Richtung der Daten und/oder Botschaften bezogen auf den Botschaftsspeicher festzulegen. Die Auswahl oder Vorgabe der auf dem zweiten Datenpfad zu übertragenen Daten kann durch einen weiteren Ausgang CM/CR (Communication Mask/Communication Request) festgelegt werden.

Über CM/CR z.B. mittels Kennungen und insbesondere mit Hilfe eines Command-Request-Registers und eines Command-Mask-Register sowie entsprechende Steuerkennungen oder Steuerbits ist damit und mit den Ausgängen WRS und RDS eine Steuerung der Übertragung über den zweiten Datenpfad sowie die Auswahl bzw. das Vorgeben der entsprechenden Daten und/oder Botschaften für den zweiten Datenpfad möglich. Damit kann das CPU-Interface, also insbesondere Schnittstellenbaustein 204, z.B. mit CPU-Interface-Registern 205 und 206 weiterhin für den Transfer, also die Übertragung von Daten und/oder Botschaften von und zu der lokalen CPU, also der Host-CPU 210, verwendet werden, wobei die Übertragung der vorgebbaren Daten und/oder Botschaften, also deren Transfer über die genannten Steuereingänge WRS, RDS, CM/CR kontrolliert werden.

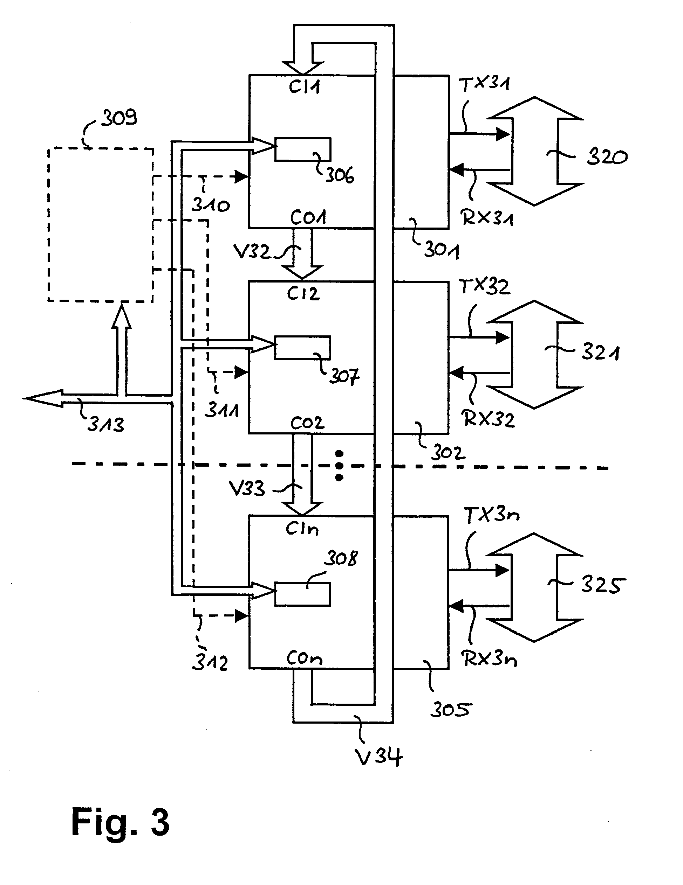

Über diesen so eingeführten zweiten zusätzlichen Datenpfad können nun vorteilhafterweise entsprechend Figur 3 mehrere Kommunikationsbausteine zu einem Gateway, insbesondere kaskadiert, zusammengeschaltet werden. In einer bevorzugten Ausführungsform können somit beliebig viele Kommunikationsbausteine, insbesondere CAN-Module, über das Gateway-Interface, also das Kommunikationsschnittstellenelement zu einem Gateway zusammengeschaltet werden und zweckmäßigerweise ringförmig jeweils von Ausgang CO (Cascade Output) zu Eingang CI (Cascade Input) des nächsten Kommunikationsbausteins verbunden werden. Dies ist auch für andere Bussysteme und auch für unterschiedliche Bussysteme am Gateway möglich.

Derart sind in Figur 3 Kommunikationsbausteine 300, 301 bis 305 beispielsweise als CAN-Module CAN1, CAN2 bis CANn, wobei n eine natürliche Zahl ist, verschaltet. Jeder dieser Kommunikationsbausteine besitzt einen Sendeausgang (TX31, TX32, TX3n) sowie einen Empfangseingang (RX31, RX32, RX3n) zur Verbindung mit einem entsprechenden Bus bzw. einer entsprechenden Kommunikationsverbindung 320, 321 und 325. Über die Verbindungen V32, V33 und V34 sind diese beliebig vielen Kommunikationsbausteine hier insbesondere ringförmig miteinander verschaltet. Eine Sternschaltung o.ä. ist aber ebenso denkbar. Dabei ist die Verbindung V32 von Ausgang CO1 des Kommunikationsbausteins 300 zu Eingang CI2 des Kommunikationsbausteins 301 angeordnet, die Verbindung V33 von CO2 von 301 zu CIn von Kommunikationsbaustein 305 und die Verbindung V34 von dem Ausgang COn des Kommunikationsbausteins 305 zum Eingang CI1 des Kommunikationsbausteins 300 realisiert.

Aus Gründen der Übersichtlichkeit sind nun die Register in Registerblöcke 306, 307 und 308 zusammengefasst und als sogenannte CPU-Interface-Register CPU IFC dargestellt, wobei die Verbindung zur Host-CPU schematisch und übersichtlicher als CPU-Bus 313 dargestellt ist. Die Steuerwerke der einzelnen Kommunikationsbausteine gemäß Figur 2 sind hier in Figur 3 optional als Gateway-Gesamtsteuerwerk, also als Gateway-Finite-State-Machine 309 dargestellt und steuern über die Ausgänge 310, 311 und 312 die Übertragung auf dem zweiten Datenpfad wie vorher beschrieben. D.h. über jede der Verbindungen 310, 311 und 312 werden insbesondere die Ausgänge WRS und RDS und/oder CM/CR entsprechend Figur 2 realisiert. Damit erlaubt es das Gateway-Interface bzw. die über die Kommunikationsschnittstellenelemente verschalteten Kommunikationsbausteine über den zweiten Datenpfad Daten und/oder Botschaften sehr schnell zwischen allen Kommunikationsbausteinen zu transferieren. Insbesondere kann auch eine Botschaft gleichzeitig von einem Kommunikationsbaustein zu mehreren anderen Kommunikationsbausteinen übertragen werden.

Ein solcher Kommunikationsbaustein mit Gateway-Interface, also mit Kommunikationsschnittstellenelement, zur Realisierung eines zweiten zusätzlichen Datenpfades kann sowohl als Teil eines Gateways wie in Figur 3 dargestellt eingesetzt werden als auch als Einzelcontroller oder Einzelbaustein ohne Gateway-Funktion. Auch wenn die Kommunikationsbausteine in der Hardware als Gateway zusammengeschaltet sind, kann durch die Konfiguration der Software eingestellt werden oder auch im Steuerwerk direkt berücksichtigt werden, welche dieser Kommunikationsbausteine als Gateway zusammenarbeiten und welche unabhängig arbeiten, sodass eine sehr flexible und selektive Gateway-Zusammenstellung aus den vorhandenen bzw. gewünschten Kommunikationsbausteinen ermöglicht wird.

Die Steuerung dieser Gateway-Funktion, also welche Botschaft von welchem Bus zu welchem anderen Bus weitergeleitet werden soll, also die Steuerung des zweiten Datenpfades, erfolgt über das genannte Gateway-Steuerwerk 309, also die Gateway-Finite-State-Machine, das entweder als eigene State-Machine in Hardware aufgebaut ist oder auch in Software, insbesondere im Host läuft und über genannte spezielle Register, insbesondere Communication-Request-Register oder Communication-Mask-Register auf die Gateway-Steuereingänge zugreift. Damit ist vorteilhafterweise eine schnelle Datenübertragung und eine hohe Flexibilität, insbesondere freie Konfigurierbarkeit der Anzahl der Busanschlüsse sowie eine hohe Flexibilität bezüglich der Zusammenstellung und des Aufbaus eines Gateways möglich.

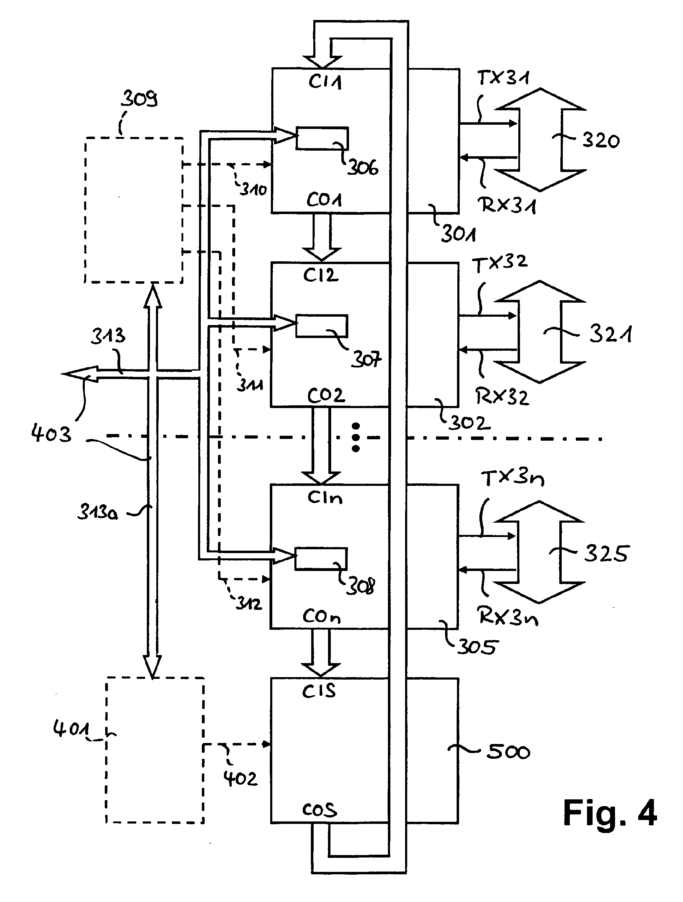

Figur 4 erweitert nun die in Figur 3 eben beschriebene Anordnung um wenigstens ein erfindungsgemäßes Schnittstellenmodul als Datenintegrationseinheit (Daten-Integration-Unit DIU). Dabei sind gleiche Teile aus Figur 3 mit gleichen Bezugszeichen wie in Figur 3 bezeichnet und werden an dieser Stelle nicht nochmals beschrieben. So kann die Beschreibung zu den Figuren 2 und 3 auch bei Figur 4 vollständig zugrunde gelegt werden.

Wie bereits erwähnt ist in diesen Ausführungsbeispielen insbesondere auf CAN bzw. TTCAN Bausteine abgehoben. Die erfindungsgemäße Funktion bzw. die erfindungsgemäßen Gegenstände lassen sich aber auf beliebige, auch gemischte Bussysteme bzw. Kommunikationssysteme sowie auf die zugehörigen Bausteine anwenden.

Zusätzlich ist nun in Figur 4 ein Schnittstellenmodul 500 als Datenintegrationseinheit dargestellt welches über einen Eingang CIS (Cascade Input des Schnittstellenmoduls) und einen Ausgang COS (Cascade Output des Schnittstellenmoduls) verfügt. Über CIS und COS ist das Schnittstellenmodul in die zusammen geschalteten zweiten Datenpfade der Kommunikationsschnittstellenelemente der Kommunikationsbausteine eingekoppelt. Dazu ist das Schnittstellenmodul 500 über CIS mit CO(n) und über COS mit CI1 oder CI(n+1) verbunden. Es können somit beliebig viele Kommunikationsbausteine bzw. Kommunikationsschnittstellenelemente sowie eine beliebige Anzahl an Schnittstellenmodulen also DIUs über das Gateway-Interface zu einem Gateway zusammen-geschaltet werden, sie werden dazu wie dargestellt ringförmig jeweils von Cascade-Output zu Cascade-Input verbunden. Das CPU-Interface der einzelnen Kommunikationsbausteine kann weiterhin für den Transfer von Nachrichten von und zu der lokalen CPU verwendet werden. Damit ist das wenigstens eine Schnittstellenmodul 500 in den bereits beschriebenen Kaskadenring integriert und es gelten die bereits bei den Figuren 2 und 3 beschriebenen Abläufe und Vorteile diesbezüglich auch für das oder die Schnittstellenmodule.

So erlaubt es ein solchermaßen erstelltes Gateway-Interface mit diesem wenigstens einen Schnittstellenmodul Messages also Nachrichten bzw. Daten und/oder Botschaften insbesondere auch durch die Kombination von Daten und/oder Botschaften, diese schnell zwischen allen Kommunikations-Controllern sowie den Schnittstellenmodulen zu transferieren, es kann auch eine Nachricht bzw. Daten und/oder Botschaften in unterschiedlicher Kombination gleichzeitig von einem oder mehreren Kommunikationsbausteinen zu einem oder mehreren anderen Kommunikationsbausteinen übertragen werden. Dabei können durch die Schnittstellenmodule die ersten Daten und/oder Botschaften, die auf dem zweiten Datenpfad übertragen werden zu zweiten Daten und/oder Botschaften neu kombiniert bzw. angepasst werden und dann auf besagtem zweiten Datenpfad weitergeleitet werden, wodurch eine nochmals erhöhte Flexibilität und Effizienz entsteht.

Ein Kommunikationsbaustein mit Gateway-Interface mit wenigstens einem solchen Schnittstellenmodul kann sowohl als Teil eines Gateways eingesetzt werden, als auch als Einzel-Kontroller ohne Gateway-Funktion. Auch wenn die Kommunikations-Controller in der Hardware als Gateway zusammengeschaltet sind, kann durch die Konfiguration der Software eingestellt werden, welche dieser Kommunikations-Controller als Gateway zusammenarbeiten und welche unabhängig arbeiten.

Die Steuerung der Gateway-Funktion (welche Nachricht bzw. Nachrichtenteile also Daten und/oder Botschaften von welchem Bus zu welchem anderen Bus weitergeleitet werden soll) erfolgt über wenigstens ein Steuerwerk (Gateway-Steuerwerk 209 bzw. 309 und/oder Modul- bzw. Routingsteuerwerk 401), das entweder als eigene State-Machine in Hardware aufgebaut ist oder in Software insbesondere auf der Host CPU läuft und über besondere Register auf die entsprechenden Steuer-Eingänge bzw. Steuerzugänge zugreift.

Der CPU Bus 313 ist in Figur 4 um eine Verbindung 313a zu dem CPU Bus 403 erweitert. Dies erfolgt um ein zweites Steuerwerk, das Modulsteuerwerk 401 anzubinden. Dieses Steuerwerk 401 ist wie das Steuerwerk 309 bzw. das Steuerwerk 209 aus Figur 2 als Zustandsmaschine oder Zustandsautomat (endlicher Automat, Finite-State-Machine FSM) darstellbar. Dieses Modulsteuerwerk 401 insbesondere als Zustandsmaschine oder Zustandsautomat kann zum einen im Schnittstellenmodul 500 selbst untergebracht sein oder kann diesem zugeordnet sein und außerhalb lokalisiert werden. Insbesondere kann sie in einer Ausführungsform im Teilnehmer 210, dem Host, enthalten sein. In einer Ausführungsform ist sie direkt im Gateway-Interface 212 also dem Kommunikationsschnittstellenelement enthalten. Ebenso kann das Steuerwerk 401 in einem Kommunikationsbaustein z.B. in 305 oder 301 untergebracht sein. Auch die dargestellte Trennung zwischen Steuerwerk 309 und Steuerwerk 401 ist zwar vorteilhaft aber nicht zwingend. So können die Steuerwerke 309 und 401 in einem Steuerwerk z.B. in 209 vereint sein, für das dann bezüglich dessen Position/Lokalisation die vorgenannten Überlegungen ebenso gelten.

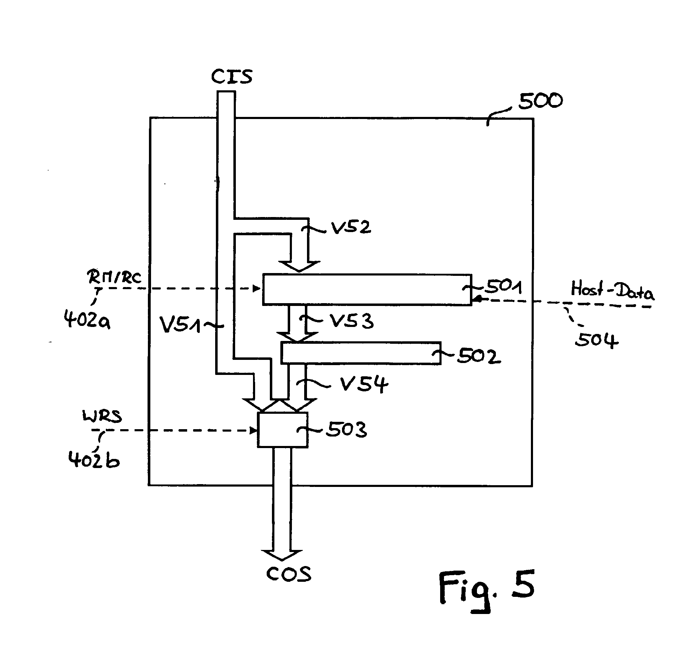

Das Steuerwerk 401 steuert über wenigstens einen Steuerzugang bzw. Steuereingang 402 das Schnittstellenmodul 500 an. Dazu ist in Figur 5 das Schnittstellenmodul 500 in einer vorteilhaften Ausführungsform nochmals näher beschrieben.

Darin ist mit CIS wieder der Eingang und mit COS der Ausgang des Datenintegrationsmoduls also des Schnittstellenmoduls 500 beschrieben. In dem Schnittstellenmodul sind zwei Übertragungspfade dargestellt. Der Erste Übertragungspfad ist mit V51 bezeichnet und führt direkt vom Eingang CIS zu einem Schaltmittel 503, welches als insbesondere als Multiplexer bzw. Multiplexbaustein ausgebildet ist. Der zweite Übertragungspfad führt über die Verbindungen V52 und V53 und V54 ebenso zu dem Schaltmittel 503. Durch das Schaltmittel insbesondere den Multiplexbaustein können somit die beiden Übertragungspfade auf den Ausgang COS verschaltet werden. Erfindungsgemäß ist in dem Schnittstellenmodul ein Koppelelement 501 dargestellt, welches über CIS oder über einen weiteren Datenpfad (Hier mit 504 Host Data bezeichnet) von der Finite-State-Machine bzw. Special Function Registern Daten integriert, die diese von der angeschlossenen Host-CPU oder weiteren Modulen wie z.B. andere Kommunikationsbausteine oder sonstige extern zum Kaskadenring angeordnete Bausteine und/oder Busteilnehmer erhalten, die nicht an den Kaskaden-Ring angeschlossen sind. Eine direkte Anbindung der betroffenen Module an diesen zusätzlichen Eingang ist ebenfalls denkbar. Die Erlaubnis, Daten in das Schnittstellenmodul zu schreiben wird in diesem Fall durch die Gateway-Steuerung erteilt. Diese eingehenden Daten und/oder Botschaften bzw. Teile davon werden dann neu zusammenstellt. Es werden somit erste Daten und/oder Botschaften zu zweiten Daten und/oder Botschaften kombiniert und weitergeleitet.

Insbesondere ist dabei in einer zweckmäßigen Ausgestaltung ein Speicherelement 502, insbesondere als Register oder Registerbaustein vorgesehen, welcher die zweiten also die neu kombinierten Daten und/oder Botschaften vor der Weiterleitung speichert. Dabei können die Daten und/oder Botschaften in das Speicherelement 502 hinein kombiniert werden, also die ausgewählten Daten und/oder Botschaften insbesondere als Bits oder Bytes oder auch beliebig große Bitgruppen nacheinander ausgewählt und in das Speicherelement 502 neu zusammengestellt werden bevor dann die Weiterleitung der vollständigen neuen Daten bzw. der neuen Botschaft erfolgt. Das Speicherelement 502 kann dabei auch Teil des Koppelelementes sein oder in dem Koppelelement kann ein Speicher ähnlicher Funktion vorgesehen werden. Ebenso ist denkbar, dass das Koppelelement die Daten und/oder Botschaften direkt ohne Zwischenspeicherung weiterleitet. In einem Fall kann vorgesehen sein, dass die ersten Daten und/oder Botschaften in das Koppelelement gelangen und dort sofort neu kombiniert und weitergeleitet werden. Auch können die ersten Daten und/oder Botschaften vorab innerhalb oder außerhalb des Koppelelementes gespeichert, dann zu zweiten Daten und/oder Botschaften zusammengestellt und dann mit oder ohne Zwischenspeicherung weitergeleitet werden. Ob und wie die Daten gespeichert und neu zusammengestellt werden hängt somit von der jeweiligen Ausführungsform, insbesondere im Hinblick auf die Übertragung bezüglich Takt und Synchronisation sowie Wortbreite auf dem zweiten Datenpfad ab. Die Verschaltung auf diesen zweiten Datenpfad erfolgt dann über vorab genanntes Schaltmittel 503.

Aus dem Steuerwerk 401 entsprechend der Beschreibung bei Figur 4 werden das Koppelelement 501 (mit und ohne Speicherelement) und/oder das Schaltmittel 503 gesteuert. Über einen Schreib-Auswahlausgang WRS (Write Select) 402b ist das Schaltmittel, der Multiplexbaustein 503, ansteuerbar. Durch diese Ansteuerung des Multiplexers ist es möglich, den Datentransfer, also die Übertragung der Daten und/oder Botschaften zu steuern. Der Multiplexer im Datenpfad erlaubt es, also den Daten-Transfer zu steuern. Der Transfer wird über das Steuersignal WRS kontrolliert.

Über einen, je nach Anwendung variierenden Signalbus (Variierung der Bitbreite), können weitere Daten von Modulen (wie z.B. andere Kommunikationsbausteine oder sonstige extern zum Kaskadenring angeordnete Bausteine und/oder Busteilnehmer), die nicht an den Kaskaden-Ring angeschlossen sind in das Schnittstellenmodul übergeben werden. Dies erfolgt über das Signal Host-Data über 504, wie bereits oben beschrieben. Dieser Signalbus 504 kann direkt von der Gateway-Steuerung angesteuert werden oder von einem oder mehreren Modulen (bei mehreren Modulen erfolgt der Zugriff z.B. über einen Multiplexer), die Daten in den Kaskaden-Ring einspeisen möchten, ohne dabei Zugriff auf die CPU oder ein Kommunikationsmodul zu haben. Solche Module sind wie bereits beschrieben z.B. andere Kommunikationsbausteine oder sonstige extern zum Kaskadenring angeordnete Bausteine und/oder Busteilnehmer.

Die Auswahl oder Vorgabe der auf dem zweiten Datenpfad zu übertragenen Daten also die Kombination der ersten Daten und/oder Botschaften zu den zweiten Daten und/oder Botschaften kann durch einen weiteren Ausgang bzw. weitere Signale RM/RC (Routing Mask/Routing Control) 402a festgelegt werden.

Über RM/RC z.B. mittels Kennungen und insbesondere mit Hilfe eines Mask-Registers und/oder eines Steuerregisters sowie entsprechenden Auswahlkennungen oder Auswahlbits ist damit die Auswahl bzw. das Vorgeben der entsprechenden zu kombinierenden Daten und/oder Botschaften möglich. Das Daten-Integrations-Modul also das Schnittstellenmodul (DIU) erlaubt somit die Erstellung neuer Messages aus Daten verschiedener Kommunikations-Controller und ihre gleichzeitige Übertragung an ein oder mehrere Controller über den Kaskaden-Ring. Eine Änderung der Kommunikations-Controller ist somit nicht notwendig.

Mithilfe dieses Koppelelmentes (dient zur Vermittlung und Durchschaltung von einzelnen oder mehreren Signalen und wird applikationsspezifisch ausgelegt) z.B. als Koppelfeld, Switching Network oder auch als Register-Transfer-Block können die entsprechenden Teile einer Message (einschließlich Bit-Ebene) neu geordnet und aus verschiedenen Nachrichten kombiniert werden. Bei einem Register Transfer Block erfolgt eine Aufteilung der Nachricht von CIS auf mehrere Register. Die Realisierung der Datenintegration wird dann durch Übertragung einzelner und/oder ganzer Registerinhalte an die entsprechende Position z.B. in das Element 502 realisiert.

Die Steuerung der Funktion (welche Teilnachrichten zu einer neuen Nachricht kombiniert werden sollen) erfolgt über das genante Steuerwerk, das entweder als State-Machine in Hardware aufgebaut ist oder als Software insbesondere über die Host-CPU mit speziellen Registern auf die Steuer-Eingänge zugreift.

Es können beliebig viele Schnittstellenmodule oder DIUs über den Kaskaden-Ring eingebunden werden. Sie werden jeweils ringförmig von Cascade-Input nach Cascade-Output verbunden. Jede DIU kann unterschiedliche Funktionen, die wie erwähnt applikationsspezifisch auslegbar sind realisieren, ohne dass sich die einzelnen Einheiten untereinander beeinflussen.

## Patentansprüche

1. Anordnung mit wenigstens zwei Kommunikationsbausteinen (301-305) und einem Schnittstellenmodul (500), wobei die wenigstens zwei Kommunikationsbausteine jeweils ein Kommunikationsschnittstellenelement (212) enthalten, wobei das Schnittstellenmodul (500) einen Eingang (CIS) und einen Ausgang (COS) aufweist und dem jeweiligen Kommunikationsschnittstellenelement (212) ein Botschaftsspeicher (202) des Kommunikationsbausteins (200) zugeordnet ist und die wenigstens zwei Kommunikationsbausteine jeweils mit einem Datenbus (211, 320-325) verbunden sind, wobei ein erster Datenpfad (V27) zu und von dem Datenbus sowie zu und von dem Botschaftsspeicher vorgesehen ist, über welchen erste Daten und/oder Botschaften zu dem und von dem Botschaftsspeicher (202) geleitet werden, wobei das Kommunikationsschnittstellenelement (212) einen zusätzlichen zweiten Datenpfad (V28-V31) bereitstellt, der derart ausgebildet ist, dass die ersten Daten und/oder Botschaften des ersten Datenpfades (V27) wenigstens teilweise über den zusätzlichen zweiten Datenpfad (V28-V31) geleitet werden **dadurch gekennzeichnet, dass** das jeweilige Kommunikationsschnittstellenelement einen Eingang (CI) und einen Ausgang (CO) aufweist womit die wenigstens zwei Kommunikationsbausteine über den zweiten Datenpfad zusammengeschaltet werden, wobei das Schnittstellenmodul (500) über den Eingang (CIS) und den Ausgang (COS) in diesen zweiten Datenpfad derart geschaltet ist, dass sich eine ringförmige Verschaltung der wenigstens zwei Kommunikationsbausteine und des Schnittstellenmoduls ergibt und das Schnittstellenmodul darüber die ersten Daten und/oder Botschaften wenigstens teilweise empfängt, wobei das Schnittstellenmodul derart ausgestaltet ist, dass die empfangenen ersten Daten und/oder Botschaften wenigstens teilweise zu zweiten Daten und/oder Botschaften kombiniert und über den zweiten Datenpfad übertragen werden.

2. Anordnung nach Anspruch 1, **dadurch gekennzeichnet, dass** in dem Schnittstellenmodul (500) ein erster Übertragungspfad (V51) und ein zweiter Übertragungspfad (V52, V53, V54) vorgesehen sind und ein Schaltmittel (503) vorhanden ist, das derart ausgestaltet sind, dass der erste Übertragungspfad (V51) und der zweite Übertragungspfad (V52, V53, V54) des Schnittstellenmoduls auf den Ausgang (COS) verschaltet werden.

3. Anordnung nach Anspruch 2, durch **gekennzeichnet**, dass dem Schnittstellenmodul ein Steuerwerk (401) zugeordnet, insbesondere enthalten ist, welches das Schaltmittel (503) steuert

4. Anordnung nach Anspruch 2, durch **gekennzeichnet**, dass das Schaltmittel (503), als Multiplexbaustein ausgebildet ist.

5. Anordnung nach Anspruch 2, durch **gekennzeichnet**, dass das Koppelelement (501) als Koppelfeld ausgebildet ist.

6. Anordnung nach Anspruch 2, durch **gekennzeichnet**, dass das Koppelelement (501) auf einem Register-Transfer-Block basiert.

7. Anordnung nach Anspruch 2, durch **gekennzeichnet**, dass im Schnittstellenmodul im zweiten Übertragungspfad (V52, V53, V54) ein Speicherelement (502) enthalten ist.

8. Anordnung nach Anspruch 7, durch **gekennzeichnet**, dass im Schnittstellenmodul das Speicherelement (502) als Registerbaustein ausgebildet ist.

## Claims

1. Arrangement having at least two communication chips (301 - 305) and an interface module (500), wherein the at least two communication chips respectively contain a communication interface element (212), wherein the interface module (500) has an input (CIS) and an output (COS), and the respective communication interface element (212) has an associated message memory (202) in the communication chip (200) and the at least two communication chips are respectively connected to a data bus (211, 320 - 325), wherein a first data path (V27) to and from the data bus and to and from the message memory is provided which is used to route first data and/or messages to and from the message memory (202), wherein the communication interface element (212) provides an additional second data path (V28 - V31) which is designed such that the first data and/or messages on the first data path (V27) are at least to some extent routed via the additional second data path (V28 - V31), **characterized in that** the respective communication interface element has an input (CI) and an output (CO) which are used to interconnect the at least two communication chips via the second data path, wherein the interface module (500) is connected into this second data path by means of the input (CIS) and the output (COS) such that the at least two communication chips and the interface module are connected up annularly and the interface module uses this to receive the first data and/or messages at least to some extent, wherein the interface module is designed such that the received first data and/or messages are at least to some extent combined to form second data and/or messages and are transmitted via the second data path.

2. Arrangement according to Claim 1, **characterized in that** the interface module (500) contains a first transmission path (V51) and a second transmission path (V52, V53, V54), and a switching means (503) is present which is designed such that the first transmission path (V51) and the second transmission path (V52, V53, V54) of the interface module are connected up to the output (COS).

3. Arrangement according to Claim 2, **characterized in that** the interface module has an associated control unit (401), particularly contains a control unit (401), which controls the switching means (503).

4. Arrangement according to Claim 2, **characterized in that** the switching means (503) is in the form of a multiplexing chip.

5. Arrangement according to Claim 2, **characterized in that** the coupling element (501) is in the form of a switching matrix.

6. Arrangement according to Claim 2, **characterized in that** the coupling element (501) is based on a register transfer block.

7. Arrangement according to Claim 2, **characterized in that** the interface module in the second transmission path (V52, V53, V54) contains a memory element (502).

8. Arrangement according to Claim 7, **characterized in that** the interface module contains the memory element (502) in the form of a register chip.

## Revendications

1. Système qui présente au moins deux modules de communication (301-305) et un module d'interface (500),
les deux ou plusieurs modules de communication contenant chacun un élément (212) d'interface de communication,
le module d'interface (500) présentant une entrée (CIS) et une sortie (COS) et une mémoire à messages (202) du module de communication (200) étant associée à chaque élément (212) d'interface de communication,
les deux ou plusieurs systèmes de communication étant tous reliés à un bus de données (211, 320-325),
un premier parcours de données (V27) étant prévu vers et depuis le bus de données ainsi que vers et depuis la mémoire à messages et transportant des premières données et/ou des messages vers et depuis la mémoire à messages (202),
l'élément (212) d'interface de communication présentant un deuxième parcours de données (V28-V31) supplémentaire configuré de telle sorte que les premières données et/ou les messages du premier parcours de données (V27) sont conduits au moins en partie par le deuxième parcours de données (V28-V31) supplémentaire,
**caractérisé en ce que**
chaque élément d'interface de communication présente une entrée (CI) et une sortie (CO) par lesquels les deux ou plusieurs modules de communication sont raccordés par l'intermédiaire du deuxième parcours de données,
**en ce que** le module d'interface (500) est raccordé dans ce deuxième parcours de données par son entrée (CIS) et sa sortie (COS) de manière à obtenir un circuit en anneau des deux ou plusieurs modules de communication et de sorte que le module d'interface reçoive par là au moins une partie des premières données et/ou des messages et
**en ce que** le module d'interface est configuré de telle sorte que les premières données et/ou messages qu'il reçoit sont combinés au moins en partie avec des deuxièmes données et/ou des messages et sont transmis par le deuxième parcours de données.

2. Système selon la revendication 1, **caractérisé en ce qu'**un premier parcours de transfert (V51) et un deuxième parcours de transfert (V52, V53, V54) sont prévus dans le module d'interface (500) et **en ce qu'**ils présentent un moyen de commutation (503) configuré de telle sorte que le premier parcours de transfert (V51) et le deuxième parcours de transfert (V52, V53, V54) du module d'interface sont raccordés à la sortie (COS).

3. Système selon la revendication 2, **caractérisé en ce qu'**un ensemble de commande (401) est associé au module d'interface et y est en particulier contenu pour commander le moyen de commutation (503).

4. Système selon la revendication 2, **caractérisé en ce que** le moyen de commutation (503) est configuré comme module de multiplexage.

5. Système selon la revendication 2, **caractérisé en ce que** l'élément d'accouplement (501) est configuré comme champ d'accouplement.

6. Système selon la revendication 2, **caractérisé en ce que** l'élément de couplage (501) est basé sur un bloc de transfert à registre.

7. Système selon la revendication 2, **caractérisé en ce que** le module d'interface du deuxième parcours de transfert (V52, V53, V54) contient un élément de mémoire (502).

8. Système selon la revendication 7, **caractérisé en ce que** l'élément de mémoire (502) du module d'interface est configuré comme module à registre.
